# FASCICULE DE BREVET EUROPEEN

(11) **EP 2 247 545 B1**
(45) Date de publication et mention de la délivrance du brevet: **13.01.2021**
(21) Numéro de dépôt: 09704909.2
(22) Date de dépôt: 16.01.2009
(51) Int. Cl.: C03C 3/085, C03C 8/02, C03C 17/04, F24C 15/10, C03C 10/00, C03C 3/076

(54) **ARTICLE VITROCERAMIQUE RENFORCE ET EMAIL ADAPTE POUR SON REVETEMENT**
VERSTÄRKTER GLASKERAMIKGEGENSTAND UND EMAILLE FÜR DESSEN BESCHICHTUNG
REINFORCED GLASS-CERAMIC ARTICLE AND ENAMEL ADAPTED FOR COATING SAME

(30) Priorité: 18.01.2008 FR 0850313
(43) Date de publication de la demande: 10.11.2010
(73) Titulaire: Eurokera S.N.C., 02405 Château-Thierry Cedex (FR)
(72) Inventeur: PELLETIER, Stephanie, F-75014 Paris (FR); CHOPINET, Marie-helene, F-75018 Paris (FR); FAILLAT, Caroline, F-02400 Belleau (FR); ROUILLON, Marie-Helene, F-02400 Chateau-Thierry (FR); VILATO, Pablo, F-75014 Paris (FR)
(74) Mandataire: Saint-Gobain Recherche
(86) Numéro de dépôt international: PCT/FR2009/050063
(87) Numéro de publication internationale: WO 2009/092974

(56) Documents cités:
- EP-A- 0 794 158
- EP-A- 1 275 620
- EP-A1- 1 099 670
- WO-A-03/084891
- FR-A- 2 732 960
- JP-A- S 533 414
- JP-A- H07 101 748
- JP-A- S61 136 936
- US-A- 3 840 394
- DATABASE WPI Week 197808 Thomson Scientific, London, GB; AN 1978-15025A & JP S53 3414 A (OKUNO PHARM IND KK) 13 January 1978 (1978-01-13)

## Description

La présente invention concerne un article (substrat, produit) en vitrocéramique, en particulier une plaque vitrocéramique, destiné(e) par exemple à couvrir ou recevoir des éléments de chauffage, comme par exemple une plaque de cuisson, ou une porte de four, ou un insert de cheminée, ou un pare-feu, etc, un procédé d'obtention dudit article, et une nouvelle composition d'émail adaptée pour son revêtement. Plus particulièrement, la présente invention concerne un article en vitrocéramique renforcé(e) mécaniquement ainsi que le procédé de renforcement d'un article vitrocéramique et/ou l'émail permettant d'obtenir ledit article en vitrocéramique renforcé(e).

Les ventes d'articles tels que des plaques de cuisson en vitrocéramique sont en augmentation constante depuis plusieurs années. Ce succès s'explique notamment par l'aspect attractif de ces plaques et par leur facilité de nettoyage.

Rappelons qu'une vitrocéramique est à l'origine un verre, dit verre précurseur (ou verre-mère ou green-glass), dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Il existe actuellement différents types de plaques en vitrocéramique, chaque variante étant le résultat d'études importantes et de nombreux essais, étant donné qu'il est très délicat de faire des modifications sur ces plaques et/ou sur leur procédé d'obtention sans risquer un effet défavorable sur les propriétés recherchées : en particulier, pour pouvoir être utilisée comme plaque de cuisson, une plaque vitrocéramique doit généralement présenter une transmission dans les longueurs d'onde du domaine du visible à la fois suffisamment basse pour masquer au moins une partie des éléments de chauffage sous-jacents au repos et suffisamment élevée pour que, selon les cas (chauffage radiant, chauffage par induction, etc), l'utilisateur puisse détecter visuellement les éléments de chauffage en état de marche dans un but de sécurité et/ou puisse lire le cas échéant les afficheurs ; elle doit également présenter une transmission élevée dans les longueurs d'onde du domaine de l'infrarouge dans le cas notamment des plaques à foyers radiants.

Les plaques vitrocéramiques doivent également présenter une résistance mécanique suffisante telle qu'exigée dans leur domaine d'utilisation (par exemple selon la norme EN 60335-2-6 pour les plaques de cuisson dans le domaine de l'électroménager). En particulier pour pouvoir être utilisées comme plaques de cuisson, les plaques vitrocéramiques doivent présenter une résistance suffisante à la pression et aux chocs pouvant survenir (support et chute d'ustensiles, etc.). Généralement, les plaques vitrocéramiques seules ont une résistance mécanique se traduisant notamment par un facteur d'échelle (défini ultérieurement) compris entre 150 et 180 MPa

Les principales plaques actuelles sont de couleur sombre, en particulier noires, mais il existe également des plaques d'aspect plus clair (en particulier blanches, présentant par exemple un flou d'au moins 50% comme décrit dans le brevet FR2766816), voire des plaques transparentes munies de revêtements opacifiants. Parmi les revêtements (fonctionnels et/ou décoratifs) connus pour les plaques vitrocéramiques, on trouve traditionnellement les émaux, à base de fritte de verre et de pigments, et certaines peintures résistant à haute température, à base par exemple de résines alkydes. Les émaux présentent notamment l'avantage de pouvoir être déposés sur le verre précurseur (ou verre-mère ou green-glass) avant céramisation et de pouvoir être cuits lors de la céramisation, et présentent également l'avantage de pouvoir résister à des hautes températures (permettant l'usage de différents moyens de chauffage pour la plaque) ; cependant ils présentent l'inconvénient de n'autoriser généralement qu'un dépôt unique (pas de superposition d'émail possible) à faible épaisseur sous peine notamment de s'écailler et d'endommager mécaniquement la plaque vitrocéramique. La peinture, quant à elle, peut s'appliquer en plusieurs couches si besoin est ; cependant, elle doit être appliquée après céramisation, et donc nécessite une cuisson supplémentaire, et reste limitée aux plaques pour foyers à induction (fonctionnant à plus basse température).

Plus récemment, des plaques vitrocéramiques ont également été proposées avec des revêtements à base de couches réfléchissantes déposées par pulvérisation cathodique magnétron, ou à base de mélanges vitrifiables incorporant des pigments à effets (paillettes d'oxyde d'aluminium ou de mica revêtues par des oxydes métalliques) ; cependant, les revêtements à base de couches déposées par magnétron sont plus onéreux car ils nécessitent une installation spécifique, sont généralement limités aux plaques pour foyers à induction, et leur fabrication, effectuée en reprise après céramisation, est plus complexe ou délicate ; quant aux revêtements à base de mélange vitrifiable avec pigments à effets, ils présentent les mêmes inconvénients que les émaux déjà évoqués.

Le document FR 2 732 960 décrit des compositions d'émaux pour plaques vitrocéramiques. Ces revêtements d'émaux sont déposés sur des plaques vitrocéramiques dans un but décoratif. Dans leur composition, la somme des oxydes alcalins est inférieure à 4%.

Le but de la présente invention a été de fournir de nouveaux articles vitrocéramiques (tels que des plaques) améliorés, en particulier de mettre au point une composition d'émail plus adaptée pour le revêtement de vitrocéramiques, cette composition ne présentant pas, ou de façon significativement plus limitée, les inconvénients de compositions d'émail actuellement utilisées pour les vitrocéramiques, notamment fragilisant le moins possible la vitrocéramique, tout en conservant les avantages liés à l'utilisation d'un émail, ainsi que, le cas échéant, une opacité suffisante. Se faisant, la présente invention s'est non seulement orientée vers la mise au point d'articles vitrocéramiques non fragilisés, mais a de surcroît permis l'élaboration d'articles vitrocéramiques renforcés par la mise au point d'un procédé visant à améliorer la résistance mécanique des articles vitrocéramiques.

La présente invention concerne ainsi un nouvel article (ou substrat), tel qu'une plaque, vitrocéramique et un nouvel émail pour vitrocéramiques, ledit article étant au moins en partie revêtu d'au moins une couche dudit émail, cet émail comprenant une (ou étant formé d'une ou à partir d'une) fritte de verre comprenant comme composants les composants suivants dans les proportions minimales et maximales suivantes , les proportions étant exprimées en pourcentages pondéraux (composition exprimée en pourcentages pondéraux d'oxydes ou encore pourcentages en poids, sur la base des oxydes, les constituants étant communément sous cette forme dans les compositions d'émail) :

| | |
|---|---|
| SiO₂ | 50 - 66 % et de préférence 50-65% |
| MgO | 3 - 8 % et de préférence 4-8% |
| Na₂O | 7 - 15% |
| K₂O | 0 - 3 % |
| Li₂O | 0 - 12 % |
| CaO | 0 - 10 % |
| BaO | 0 - 15% et de préférence 0-13% |
| Al₂O₃ | 0 - 3 % et de préférence 0-2% |
| ZrO₂ | 0 - 3 % et de préférence 0-2% |
| ZnO | 0 - 5 % |
| B₂O₃ | 0 - 8 % et de préférence 0-7% |

la somme des oxydes alcalinoterreux CaO + BaO étant en outre comprise entre 8 et 15 %, et de préférence entre 8 et 12 %, et la somme des oxydes alcalins Na₂O + K₂O + Li₂O étant en outre comprise entre 7 et 20%, notamment entre 7 et 15 %.

De préférence, l'article en vitrocéramique selon l'invention est une plaque vitrocéramique, destinée par exemple à couvrir ou recevoir au moins un élément de chauffage, en particulier destinée à servir de plaque de cuisson ou de paroi (en particulier porte ou partie de porte) de four ou d'insert de cheminée ou encore de pare-feu.

La présente invention concerne également un procédé de fabrication d'un article, en particulier d'une plaque selon l'invention, dans lequel on applique, de préférence par sérigraphie, la composition précédente sur l'article de verre précurseur (ou verre-mère ou green glass) avant céramisation, ladite composition étant cuite pendant le cycle de céramisation et/ou dans lequel on applique, de préférence par sérigraphie, la composition précédente sur l'article vitrocéramique après céramisation, puis on cuit ladite composition.

Avantageusement, l'article, en particulier la plaque, vitrocéramique revêtue de l'émail selon l'invention présente une résistance à la rupture améliorée (notamment par rapport aux plaques émaillées traditionnelles). La résistance à la rupture est mesurée à l'aide d'un test de flexion anneau sur tripode, sur un échantillon de plaque émaillée de dimensions de l'ordre de 70 mm X 70 mm (l'épaisseur de la plaque étant généralement en outre de l'ordre de 4 mm), la face émaillée étant mise en extension. L'échantillon repose sur 3 billes de 9.5 mm de diamètre chacune positionnées au sommet d'un triangle équilatéral inscrit dans un cercle de 40 mm de diamètre. Une force est appliquée en appuyant au centre (la contrainte étant isotrope sous cette zone) de l'échantillon avec un anneau de 10 mm de diamètre. La vitesse d'avancée de l'anneau est de l'ordre de 5 mm/min. Les résultats sont interprétés à l'aide du modèle de Weibull décrit dans l'article suivant : « A statistical distribution of strength of Materials », Royal Swedish Institute For Engineering Research, W. Weibull, Stockholm 1939, 1-45. La donnée obtenue révélatrice de la contrainte moyenne à rupture est la donnée appelée « facteur d'échelle », exprimé en MPa (ce facteur d'échelle étant en d'autres termes le résultat du dépouillement par la méthode Weibull des mesures de module de rupture en flexion (MOR)).

Ainsi, l'article, en particulier la plaque, vitrocéramique revêtu de l'émail selon l'invention présente avantageusement un facteur d'échelle, obtenu selon le modèle de Weibull après test en flexion, d'au moins 130 MPa, en particulier d'au moins 140 MPa, notamment d'au moins 150 MPa, ledit facteur pouvant aller jusqu'à 280 MPa au moins. Cette résistance à plus forte tension est particulièrement avantageuse, en particulier dans des conditions de transport et de stockage extrêmes, certaines plaques émaillées traditionnelles étant par comparaison susceptibles de casser lorsque l'on exerce une force bien moindre (ces plaques présentant par exemple un facteur d'échelle de l'ordre de 70 à 80 MPa, le facteur d'échelle des plaques non émaillées étant quant à lui généralement de l'ordre de 150 à 180 MPa). A ce sujet, on a notamment pu établir dans la présente invention pour l'article revêtu de l'émail selon l'invention que la fissure formée lors d'un choc s'oriente parallèlement à la surface, pouvant ainsi conduire à une forte dissipation de l'énergie et à une meilleure résistance mécanique. En particulier, lorsque l'émail est cuit en reprise comme précisé ultérieurement, l'article (tel que la plaque) vitrocéramique obtenu, revêtu de l'émail selon l'invention, présente avantageusement un facteur d'échelle, obtenu selon le modèle de Weibull après test en flexion, bien supérieur à 180 MPa, c'est-à-dire non seulement bien au-delà de celui des plaques émaillées traditionnelles mais dépassant même de façon significative celui des plaques vitrocéramiques nues (non émaillées),de tels articles vitrocéramiques renforcés mécaniquement étant préférentiellement visés dans la présente invention.

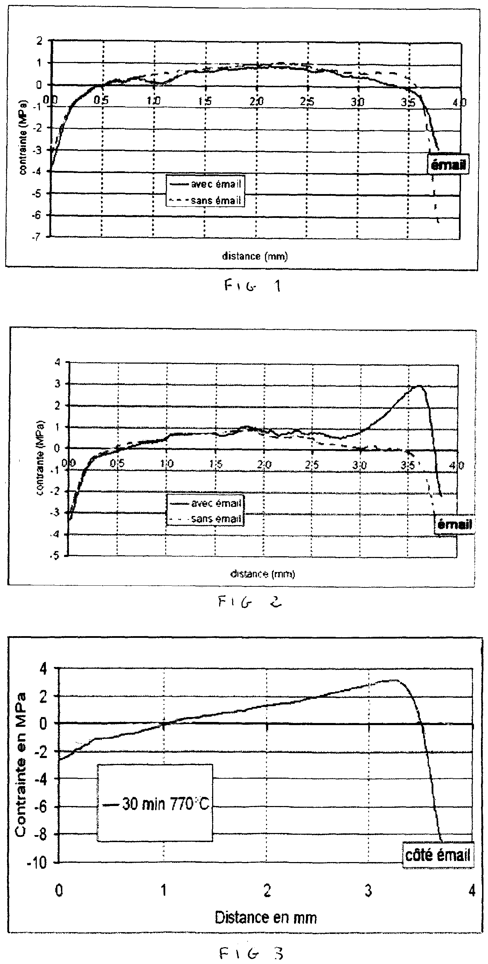

Plus généralement, on introduit un maximum de tension sous la surface de la vitrocéramique, avantageusement à proximité de ladite surface. En d'autres termes, la vitrocéramique est traitée de façon à ce que le profil des contraintes (ou distribution des contraintes résiduelles) dans l'épaisseur de la vitrocéramique présente un maximum de tension (ou valeur maximale de contrainte de tension) sous la surface de la vitrocéramique au voisinage de cette surface (en particulier dans le premier quart de l'épaisseur à partir de la surface traitée/renforcée, en au moins une zone (notamment la zone traitée) de la vitrocéramique. La présence d'un maximum de tension dans le profil des contraintes révèle le cas échéant la présence d'une flexion dans la vitrocéramique (cas de l'exemple 2 et/ou cas de l'utilisation d'un émail selon l'invention cuit en reprise comme décrit ultérieurement, le profil obtenu étant illustré en figure 3) ou ce maximum de tension peut se traduire le cas échéant par un pic dans ledit profil (cas de l'exemple 1 et/ou cas de l'utilisation d'un émail selon l'invention cuit lors de la céramisation comme décrit ultérieurement, le profil obtenu étant illustré en figure 2).

On note également généralement une zone de compression sous la surface (notamment avant le maximum de tension en allant vers la surface), cette zone de compression à faible profondeur participant notamment au renforcement en obligeant les fissures, formées le cas échéant lors d'un choc, à tourner sous la surface pour être parallèles à la surface et empêchant ainsi leur propagation.

Le renforcement obtenu par le procédé selon l'invention est au moins un renforcement relatif (par rapport au même substrat vitrocéramique, de même épaisseur, traité de façon habituelle, par exemple dans le cas, explicité ultérieurement, de l'utilisation de l'émail selon l'invention où les vitrocéramiques obtenues sont au moins bien moins fragilisées/non fragilisées/renforcées par rapport aux vitrocéramiques traitées par des émaux traditionnels) et est de préférence avantageusement un renforcement absolu (par rapport à la même vitrocéramique, de même épaisseur, nue ou non traitée).

Plus particulièrement dans le procédé de renforcement selon l'invention, on renforce au moins une zone d'au moins une face de la vitrocéramique en introduisant un maximum de tension d'au moins 1.2 MPa, et de préférence d'au moins 1.5 MPa sous la surface de la zone/face considérée et à proximité de celle-ci. De préférence, le renforcement est obtenu en traitant la vitrocéramique de façon à ce qu'elle présente une contrainte de tension (maximale) d'au moins 1.2 MPa à une profondeur d'au moins 50 µm sous la/sa surface, et de préférence d'au plus 25% de l'épaisseur de la vitrocéramique (par exemple l'épaisseur de la plaque dans le cas d'une plaque vitrocéramique) par rapport à la surface de la vitrocéramique, dans la zone considérée/traitée, comme évoqué précédemment. Lorsque l'article présente plusieurs faces, le renforcement peut être fait en une ou plusieurs parties ou la totalité d'une ou plusieurs faces, et avantageusement en au moins l'essentiel d'une face, le renforcement en une seule face (la profondeur de la contrainte de tension maximale étant déterminée à partir de cette face/surface) étant généralement suffisant. Le profil des contraintes d'épaisseur dans la vitrocéramique et le maximum de (contrainte de) tension sont mesurés à l'aide d'un Biasographe comme décrit dans l'ouvrage suivant : « Photoelasticity of Glass », H. Aben, C. Guillemet, Springer-Verlag Berlin Heidelberg 1993, 126-129, Il peuvent aussi être mesurés à l'aide d'un microscope polarisant équipé d'un babinet (« Photoelasticity of Glass », H. Aben, C. Guillemet, Springer-Verlag Berlin Heidelberg 1993, 65-66), chaque valeur de retard optique (δ) donnée par les appareils (Biasographe ou microscope polarisant) étant traduite en valeur de contrainte (σ) en utilisant une constante de Brewster (C) égale à 2.6 Brewster selon la formule σ = δ/(Cxl), l étant la largeur traversée par la lumière.

De façon préférée l'article vitrocéramique (en particulier une plaque vitrocéramique destinée par exemple à couvrir ou recevoir au moins un élément de chauffage) de la présente invention est renforcé, notamment en une face ou partie/zone d'une face (ou en au moins une face ou partie d'une face), caractérisé en ce que la vitrocéramique présente une contrainte de tension (maximale) d'au moins 1.2 MPa, et de préférence d'au moins 1.5MPa, à une profondeur, sous la surface (de ladite partie de face ou face), d'au moins 50 µm (ou plus précisément la vitrocéramique présente un profil de contraintes dans l'épaisseur tel qu'il présente une contrainte de tension (maximale) d'au moins 1.2 MPa à une profondeur d'au moins 50 µm) et de préférence d'au plus 25% de l'épaisseur de la vitrocéramique par rapport à la surface de la vitrocéramique, en au moins ladite zone ou face.

De façon préférée (notamment cas avec utilisation de l'émail selon l'invention en particulier cuit en reprise), l'article vitrocéramique renforcé selon l'invention, en particulier la plaque vitrocéramique renforcée, présente avantageusement (notamment pour la zone traitée/renforcée) un facteur d'échelle, obtenu selon le modèle de Weibull après test en flexion, supérieur à 180 MPa, dépassant ainsi celui des plaques vitrocéramiques nues, et présente en outre un module de Weibull (révélateur de la dispersion des résultats, les résultats étant d'autant moins dispersés que le module est grand) avantageusement important (supérieur à 15). La présente invention permet ainsi d'obtenir des articles vitrocéramiques présentant une résistance mécanique améliorée ou de garantir le maintien d'une bonne résistance mécanique tout en réduisant par exemple l'épaisseur de la vitrocéramique (la réduction d'épaisseur s'accompagnant habituellement d'une fragilisation de la vitrocéramique). Notamment, la présente invention permet l'obtention de plaques vitrocéramiques présentant une épaisseur de l'ordre de 3mm (au lieu de 4 mm habituellement) et conservant une bonne résistance mécanique permettant notamment son utilisation comme plaque de cuisson.

L'introduction d'un maximum de tension dans la vitrocéramique dans les procédés ou l'étape de renforcement précédemment décrits peut être faite par un traitement ou par un revêtement approprié, par exemple et selon un mode de réalisation avantageux de l'invention, par l'utilisation de l'émail selon l'invention, de préférence cuit en reprise, comme explicité plus avant. Le renforcement dans le cas de l'utilisation d'un tel revêtement se traduit en premier lieu par une non fragilisation ou une fragilisation significativement réduite de la vitrocéramique par rapport à celle revêtue d'un revêtement traditionnel de même type (c'est-à-dire, dans le cas présent, par rapport à la vitrocéramique revêtue d'un émail traditionnel), et le cas échéant se traduit également avantageusement (l'émail selon l'invention ayant été cuit lors de la céramisation ou en reprise, les plus fortes valeurs étant obtenues dans le cas de la cuisson en reprise) par une augmentation de la résistance mécanique par rapport à la vitrocéramique nue ou non traitée)

La composition de l'émail selon l'invention, apte à renforcer la vitrocéramique et défini plus avant, va maintenant être plus précisément explicitée ci-après. Dans cette composition, les domaines définis pour chacun des composants sont prépondérants pour l'obtention des propriétés recherchées, le respect de ces domaines permettant notamment de garantir à la fois l'élaboration de la fritte à haute température, un bon nappage de l'émail sur le substrat, la tenue mécanique recherchée et la durabilité chimique, etc.

Comme indiqué plus avant, la composition mentionnée comprend de préférence moins de 2 % d'alumine Al₂O₃, et de façon particulièrement préférée cette composition est dénuée d'alumine.

A noter que, outre les constituants évoqués ci-dessus, la composition peut le cas échéant renfermer d'autres constituants (par exemple sous forme de traces liées au degré de pureté des matières premières) en quantité limitée (inférieure à 5%, généralement inférieure à 2%, en particulier inférieure à 1%) dans la mesure où ces constituants ne compromettent pas les propriétés recherchées, la composition étant en outre avantageusement exempte de métaux toxiques tels que le plomb, le mercure, le cadmium et le chrome hexavalent.

On note de façon surprenante que l'émail selon l'invention, à base de la fritte de verre précédemment mentionnée, présente un coefficient de dilatation (ce coefficient étant mesuré plus précisément sur la fritte de verre de l'émail, considérée comme un verre) d'au moins 60.10⁻⁷ K⁻¹ (et généralement plus élevé, en particulier d'au moins 80.10⁻⁷ voire 100.10⁻⁷ K⁻¹) c'est-à-dire bien plus élevé que celui du substrat vitrocéramique. Or jusqu'à présent, il était d'usage de chercher des émaux de coefficients de dilatation très faibles proches de celui du substrat vitrocéramique, la tenue de l'émail sur le substrat étant supposée d'autant moins bonne que la différence entre les coefficients de dilatation était élevée.

L'émail sélectionné selon l'invention et l'article, en particulier la plaque, revêtu de cet émail présentent une bonne tenue thermique compatible avec l'utilisation de divers types de chauffages (par induction, radiant, halogène, gaz...), résiste à la rayure, à l'abrasion et aux chocs thermiques, présente une bonne résistance au vieillissement, offre le cas échéant (notamment lorsque la fritte est combinée avec des pigments et/ou combinée avec une autre couche telle qu'une couche de peinture comme explicité ultérieurement) un excellent compromis entre l'opacité communément recherchée pour les émaux et la résistance aux différentes contraintes mécaniques auxquelles les plaques revêtues sont soumises, l'émail, comme recherché selon l'invention, n'affectant pas et même améliorant la résistance mécanique des plaques sur lesquelles l'émail est déposé, lesdites plaques revêtues de l'émail selon l'invention présentant en particulier une ou des propriétés de résistance mécanique (lorsque que la surface émaillée est sollicitée) améliorées (en particulier résistance à la rupture en flexion et résistance à l'impact) par rapport aux plaques revêtues d'émaux traditionnels (qui en particulier cassent systématiquement au test d'impact), comme précisé et illustré ultérieurement.

Contrairement à ce que l'on pouvait redouter, les interactions éventuelles entre la vitrocéramique et la couche d'émail selon l'invention n'entraînent pas de perturbation ou de modification néfaste de la surface de la vitrocéramique. Du point de vue du procédé, la composition déposée ne diffère pas d'un émail classique et est totalement compatible avec les lignes de production existantes, en particulier elle peut être appliquée par sérigraphie en utilisant les toiles et machines de sérigraphie habituelles ; pour autant, comme déjà indiqué, elle ne présente pas les défauts d'un émail classique (en particulier peu ou pas de fragilisation de la face décorée comme déjà évoqué, etc.). Par rapport aux couches minces déposées par magnétron, elle est plus économique et, étant isolante électriquement, elle peut être utilisée sans ajustement particulier avec les touches sensitives les plus fréquentes à principe capacitif. Elle est également compatible avec tous types de chauffage (en particulier, elle supporte les températures élevées - jusqu'à 700°C - des éléments chauffants radiants et convient aux champs magnétiques des bobines d'induction, etc), contrairement aux peintures et le cas échéant aux couches par magnétron, généralement réservées à certains types de chauffage. Elle peut également être déposée dans toute zone de la plaque (y compris zones de chauffe) contrairement notamment aux peintures.

Outre la fritte de verre (ou particules de verre) de composition précédemment explicitée, l'émail selon l'invention peut également comprendre d'autres composants. Rappelons que les émaux sont généralement formés (avant application sur le substrat et cuisson) d'une poudre comprenant une fritte de verre (devant former la matrice vitreuse) et des pigments (en tant que colorants notamment, ces pigments pouvant également faire partie de la fritte), la fritte et les pigments étant à base d'oxydes métalliques, et d'un médium ou « véhicule » permettant l'application et l'adhésion préalable de l'émail sur un substrat.

L'émail selon l'invention peut ainsi comprendre des pigments, le taux de pigment(s), ajoutés à la fritte, dans l'ensemble fritte(s)/pigment(s) de l'émail étant généralement compris entre 20 et 80% en poids (par rapport à l'ensemble fritte(s)/pigment(s)), et de préférence entre 40 et 60%. Les pigments pour émaux peuvent être choisis parmi les composés contenant des oxydes métalliques tels que des oxydes de chrome, des oxydes de cuivre, des oxydes de fer, des oxydes de cobalt, des oxydes de nickel, des oxydes de zinc, des oxydes de manganèse, des oxydes de cérium, des oxydes de titane, voire à base d'alumine, etc. ou peuvent être choisis parmi les chromates de cuivre, les chromates de cobalt, etc. Ils sont utilisés en fonction de la coloration et/ou le cas échéant de l'opacité que l'on souhaite obtenir. Un exemple de pigments particulièrement approprié à ajouter à la fritte selon l'invention est en particulier un mélange d'oxydes de fer, chrome, cobalt et nickel.

La fritte de verre et les pigments se présentent traditionnellement sous forme de poudre avant d'être mis en suspension dans un médium. La granulométrie de l'ensemble fritte(s)/pigment(s) sous forme de poudre est généralement choisie de façon à ce qu'au moins 90 % en poids des particules formant la poudre présentent un diamètre inférieur à 20 µm, notamment inférieur à 10 µm.

La fritte de la composition selon l'invention est classiquement obtenue par fusion à haute température (plus de 1000°C) d'un mélange de matières premières (naturelles ou synthétiques) appropriées. La fritte est ensuite broyée (généralement dans un solvant, tel que l'éthanol, que l'on évapore par la suite) sous forme de poudre, et additionnée le cas échéant de pigments et/ou opacifiants. Le mélange pulvérulent (poudre de verre + pigments et/ou opacifiants) résultant (après évaporation le cas échéant du solvant de broyage) est par la suite mis en suspension dans un médium afin d'obtenir une composition (pâte) apte à être déposée sur un substrat.

La composition d'émail selon l'invention, sous sa forme prête au dépôt, comprend ainsi également généralement un médium permettant la mise à viscosité désirée pour l'application sur le substrat et permettant la liaison avec le substrat. Ce médium, choisi afin d'assurer une bonne mise en suspension des particules des frittes et pigments et devant se consumer au plus tard lors de la cuisson de l'émail, peut être tout médium ou liant organique habituellement utilisé dans les compositions d'émail traditionnelles et peut notamment comprendre des solvants, des diluants, des huiles telles que des huiles de pin et autres huiles végétales, des résines telles que des résines acryliques, des fractions de pétrole, des matières filmogènes telles que des matières cellulosiques, etc. La proportion de médium dans la composition prête à être déposée est de préférence comprise entre 40 et 60 % en poids de ladite composition, de préférence entre 45 et 55 % en poids.

La composition d'émail avant dépôt sur un article, tel qu'une plaque, se présente donc généralement sous forme d'un mélange liquide-solide stable, de consistance pâteuse, de viscosité adaptée au procédé de dépôt (en particulier par sérigraphie).

La couche d'émail déposée sur l'article ou substrat, en particulier la plaque, selon l'invention couvre généralement au moins une partie d'une face de l'article (en particulier de la plaque), en particulier toute la zone susceptible d'être exposée à des contraintes (choc ou autre) lors de l'utilisation (par exemple au moins les bords voire l'essentiel de la face dans le cas d'une plaque, la zone revêtue étant la zone renforcée), et peut couvrir la totalité de ladite face (à l'exception le cas échéant de zones et/ou d'épargnes, destinées par exemple à la lecture d'afficheurs). L'épaisseur d'une couche d'émail après cuisson (que la cuisson soit opérée pendant la céramisation après dépôt sur verre précurseur, ou soit opérée en reprise après dépôt sur la vitrocéramique, comme explicité ultérieurement) est de 1 à 10 µm, généralement de 2.5 à 5 µm. Dans le cas notamment d'une plaque, la couche définie selon l'invention peut être déposée en face inférieure ou supérieure de la plaque et est de préférence déposée en face inférieure.

De façon avantageuse, l'émail peut être déposé en une ou plusieurs couches et/ou être combiné le cas échéant avec d'autres couches. En particulier, l'émail selon l'invention peut être utilisé en plusieurs couches et/ou peut servir de sous couche à une autre couche, telle qu'une couche d'émail (notamment d'une autre nature) ou de peinture, permettant notamment selon les cas d'augmenter les épaisseurs et/ou de juxtaposer deux types de décors et/ou de procurer une opacité plus importante , etc. Un mode de réalisation de l'invention concerne ainsi un article, en, particulier une plaque, émaillé bi-couches, c'est-à-dire présentant comme revêtement au moins deux couches ou passes d'émail dont au moins une première (c'est-à-dire déposée en premier) couche ou passe de l'émail selon l'invention, les émaux de chaque couche ou passe pouvant être identiques ou pouvant être basés sur une même fritte ou différents, par exemple pouvant être de couleur différente, l'une des couches ou passes formant par exemple une trame de fond et l'autre formant un décor ou graphisme spécifique. De préférence, chaque nouvel émail rajouté le cas échéant par-dessus un émail préalablement déposé présente un point de ramollissement inférieur à celui de l'émail préalablement déposé.

De façon préférée, l'émail peut être utilisé avec au moins une couche de peinture opacifiante. La ou les couches de peinture combinées le cas échéant à l'émail selon l'invention sont avantageusement choisies de façon à résister à de hautes températures et à présenter une stabilité au niveau de leur couleur et de leur cohésion avec la plaque, et de façon à ne pas affecter les propriétés mécaniques de la plaque. Elles présentent avantageusement une température de dégradation supérieure à 350°C, sont généralement à base de résine(s) (telle(s) qu'une résine silicone, en particulier modifiée par l'incorporation d'au moins une résine alkyde, résine polyimide, polyamide, polyfluorée et/ou polysiloxane, comme les résines Dow Corning® 804, 805, 806, 808, 840, 249, 409 HS et 418 HS, Rhodorsil® 6405 et 6406 de Rhodia, Triplus® de General Electric Silicone et SILRES® 604 de Wacker Chemie GmbH, etc), et sont le cas échéant chargées (par exemple en pigment(s) ou colorant(s)), et éventuellement diluées pour ajuster leur viscosité, le diluant étant le cas échéant éliminé lors de leur cuisson ultérieure. L'épaisseur de chaque couche de peinture peut être comprise entre 1 et 100 microns (notamment entre 5 et 50 microns) et son application peut s'effectuer par toute technique adaptée, telle que dépôt à la brosse, à la raclette, par pulvérisation, dépôt électrostatique, trempage, dépôt au rideau, dépôt par sérigraphie, etc. Généralement selon l'invention, il se fait par sérigraphie, suivie le cas échéant par un séchage.

Avantageusement, le substrat, en particulier la plaque vitrocéramique, revêtu de l'émail (obtenu après cuisson) selon l'invention (l'émail au besoin comprenant des pigments et/ou étant associé à une couche de peinture, par exemple) présente une opacité telle qu'elle permet notamment le masquage d'éléments sous-jacents. L'opacité est évaluée dans le cadre de la présente invention en mesurant (colorimétrie en réflexion effectuée à l'aide d'un colorimètre Byk-Gardner Color Guide 45/0) la variation de couleur ΔE*, correspondant à la différence entre la couleur, mesurée sur la face du substrat opposée à la face portant l'émail, pour le substrat posé sur fond blanc opaque et celle pour le substrat posé sur fond noir opaque (ΔE* = ((L_{B}*-L_{N}*)² + (a_{B}*-a_{N}*)² + (b_{B}*-b_{N}*)²)^{½} selon la formule établie en 1976 par la CIE, L_{B}*,a_{B}*,b_{B}* étant les coordonnées colorimétriques de la première mesure sur fond blanc et L_{N}*,a_{N}*,b_{N}* étant celles de la seconde mesure sur fond noir). Avantageusement, le substrat vitrocéramique revêtu de l'émail selon l'invention présente une valeur de ΔE* inférieure ou égale à 0.5, de préférence inférieure ou égale à 0.4.

Comme déjà évoqué, la présente invention concerne également les procédés de fabrication des articles, en particulier des plaques, selon l'invention, et avantageusement des articles renforcés comme évoqué précédemment, dans lesquels (lorsque l'on utilise l'émail selon l'invention) on applique, de préférence par sérigraphie, la composition précédente sur l'article de verre précurseur (ou verre-mère ou green glass) avant céramisation, ladite composition étant cuite pendant le cycle de céramisation et/ou dans lesquels on applique, de préférence par sérigraphie, la composition précédente sur l'article vitrocéramique après céramisation, puis on cuit ladite composition.

De préférence lorsque la cuisson de l'émail est effectuée en reprise (après céramisation, ce mode opératoire étant également appelé procédé avec recuisson), ladite cuisson est opérée à une température permettant de développer des cristaux dans l'émail (tout en modifiant généralement l'interface de telle sorte que les fissures se propagent dans et/ou sous l'interface entre la vitrocéramique et l'émail parallèlement à la surface comme indiqué précédemment, les fissures formées dans l'émail se propageant et tournant en effet après avoir parcouru quelques micromètres dans et/ou sous l'interface de façon à être finalement parallèles à la surface). Cette température est choisie dans la gamme de températures entre lesquelles on observe notamment un bon nappage de l'émail et la formation des cristaux, cette gamme de températures se situant généralement entre 700 et 900°C pour les émaux selon l'invention. Généralement et de préférence, cette température est supérieure d'environ 250°C à 300°C par rapport à la température de ramollissement dilatométrique de l'émail (ou plus précisément du verre/de la fritte de verre formant l'émail), et de préférence correspond au (ou se situe juste au ou à l'intérieur du) pic exothermique de cristallisation de l'émail. L'émail recouvrant le substrat selon l'invention est ainsi le cas échéant cristallisé après cuisson.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques ainsi découpées sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 700°C. La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante. Le cas échéant, le procédé comprend également une opération de découpe (généralement avant céramisation), par exemple par jet d'eau, traçage mécanique à la molette, etc. suivie par une opération de façonnage (meulage, biseautage,...).

Dans le procédé selon l'invention, la composition précédemment décrite est déposée, soit sur l'article de verre précurseur soit sur l'article en vitrocéramique obtenu après céramisation, sous forme de pâte, préférentiellement par sérigraphie, l'épaisseur du film humide étant par exemple de l'ordre de quelques microns (en particulier inférieure ou égale à 20 µm, et généralement inférieure ou égale à 10 µm). Après dépôt de la composition, l'article revêtu est généralement séché (par exemple par infra-rouge ou en étuve), généralement à des températures de l'ordre de 100-150°C, de façon à évaporer le solvant (médium), fixer le revêtement et permettre la manipulation de l'article, résultant en un revêtement séché, puis selon les cas subit un cycle de céramisation traditionnel à haute température (comme évoqué notamment précédemment), la cuisson de la couche accompagnant la transformation du substrat, ou subit une (re)cuisson à une température située préférentiellement dans la zone de cristallisation comme explicité précédemment, le temps de cuisson étant adapté en fonction de la température choisie (par exemple augmenté si la température est choisie plus basse), le revêtement obtenu présentant alors une épaisseur généralement de l'ordre de quelques microns (généralement entre 1 et 10 µm, en particulier entre 2 et 5 µm). Le procédé avec (re)cuisson est généralement préféré car il permet d'adapter la température de cuisson de façon plus adaptée comme explicité précédemment et il permet d'obtenir un renforcement plus important des produits vitrocéramiques.

Dans un mode de réalisation, l'article selon l'invention peut être à base d'une vitrocéramique d'aspect noir, à transmission lumineuse faible, inférieure à 5% (telle que les plaques commercialisées sous le nom Kérablack par la société Eurokéra) revêtue par la couche d'émail selon l'invention. De préférence cependant, il s'agit d'un article, en particulier d'une plaque, de couleur généralement claire, à base d'une vitrocéramique transparente (telle que les plaques commercialisées sous le nom KeraLite par les sociétés Eurokéra et Kéraglass) ou translucide (telle que les plaques commercialisées sous le nom Kerawhite, Kerabiscuit ou Keravanilla par la société Eurokéra), revêtue par la couche d'émail selon l'invention, ladite couche pouvant être à usage décoratif et/ou fonctionnel (par exemple pouvant être destinée à masquer, au moins en partie, les éléments sous-jacents au repos, tels que éléments de chauffage et afficheurs éventuels, tout en permettant la détection des éléments de chauffage et afficheurs éventuels lorsqu'ils sont en service).

A noter que selon le nombre de couches supplémentaires par rapport à la couche d'émail selon l'invention, leur dépôt peut se faire successivement avant et/ou après (en ligne ou en reprise) céramisation, chaque dépôt étant généralement suivi par un traitement thermique. A noter également que le dépôt de la couche selon l'invention peut au besoin être effectué par une autre méthode que la sérigraphie.

Lorsque l'article selon l'invention est une plaque, ladite plaque peut le cas échéant comprendre des reliefs et/ou creux et/ou elle peut être munie de (ou associée avec des) élément(s) fonctionnel(s) ou de décor supplémentaire(s) (cadre, connecteur(s), câble(s), élément(s) de commande, afficheur(s), par exemple à diodes électroluminescentes dits « à 7 segments » ou à cristaux liquides, bandeau de commande électronique à touches sensitives et affichage digital, etc.). Le cas échéant, la plaque selon l'invention peut être montée sur le support isolant, à l'intérieur duquel sont disposés le ou les éléments de chauffage sans complexe intermédiaire visant à masquer l'intérieur de l'appareil à la vue de l'utilisateur.

L'invention concerne aussi les appareils (ou dispositifs) de cuisson et/ou de maintien à haute température comportant au moins un substrat (plaque ou porte) selon l'invention (par exemple cuisinières, tables de cuisson encastrables, fours, etc). L'invention englobe aussi bien des appareils de cuisson comportant une seule plaque que des appareils comportant plusieurs plaques, chacune de ces plaques étant le cas échéant à feu unique ou à feux multiples. Par le terme « feu », on entend un emplacement de cuisson. L'invention concerne également des appareils de cuisson mixtes dont la ou les plaques de cuisson comportent plusieurs types de feux. En outre, l'invention n'est pas limitée à la fabrication de plaques de cuisson pour cuisinières ou tables de cuisson. Les plaques fabriquées conformément à l'invention peuvent également être, comme précisé précédemment, d'autres plaques (inserts de cheminées, pare-feu, etc) devant présenter une grande insensibilité aux variations de température.

Les exemples suivants illustrent la présente invention sans toutefois en limiter la portée.

On fabrique une plaque vitrocéramique dont les deux faces sont lisses, à partir d'un verre ayant une composition selon la demande de brevet FR2657079, celle-ci en particulier comprenant en pourcentages pondéraux les oxydes suivants :

| | |
|---|---|
| SiO₂ | 69,05 |
| Al₂O₃ | 18,90 |
| Li₂O | 3,3 |
| MgO | 0,9 |
| ZnO | 1,55 |
| BaO | 0,75 |
| K₂O | 0,1 |
| TiO₂ | 2,6 |
| ZrO₂ | 1,75 |
| As₂O₃ | 0,9 |
| Na₂O | O,2 |

Ce verre est fondu aux alentours de 1600-1750°C, en une quantité telle qu'un ruban de verre puisse être laminé, ruban dans lequel des plaques de verre, de dimensions finales 56,5 cm x 56,5 cm x 0,4 cm, sont découpées.

Les plaques sont revêtues par sérigraphie sur leur face supérieure avec une composition d'émail stable sérigraphiable (à base d'une poudre de composition précisée dans chacun des exemples, la poudre étant empâtée dans un médium à base de résine acrylique et d'huile de pin commercialisé sous la référence MX54 par la société Ferro en vue de son dépôt sur la plaque et ledit médium se consumant au plus tard lors de la cuisson de l'émail) à l'aide de toiles habituelles en polyester ou polyamide, soit avant céramisation, soit après céramisation comme précisé ultérieurement selon les exemples, puis séchées aux alentours de 100-150°C.

Les plaques (avant ou après revêtement par l'émail selon les exemples) sont céramisées sur des plateaux céramiques selon un cycle tel que décrit dans la demande de brevet FR2657079. Lorsque les plaques sont revêtues de l'émail après céramisation, elles subissent en outre une cuisson, après le dépôt et le séchage de l'émail, comme précisé selon les exemples.

On obtient des plaques vitrocéramiques revêtues d'une couche d'émail. Ces plaques sont découpées pour former des éprouvettes de 70 mm x 70 mm, lesquelles sont testées en terme de résistance mécanique en mesurant leur facteur d'échelle (exprimé en MPa) ainsi que leur module de Weibull au moyen d'un test de flexion anneau sur tripode, les résultats étant interprétés à l'aide du modèle de Weibull, comme décrit précédemment dans le présent texte, la surface décorée étant en extension. Le profil des contraintes d'épaisseur dans la vitrocéramique est en outre mesuré dans certains exemples à l'aide d'un Biasographe comme décrit dans l'ouvrage suivant : « Photoelasticity of Glass », H. Aben, C. Guillemet, Springer-Verlag Berlin Heidelberg 1993, 126-129, mentionné plus avant, ces profils apparaissant dans les figures 1, 2 et 3, ces figures illustrant respectivement les profils de contrainte dans l'épaisseur pour les exemples suivants : exemple de référence 3, exemple 1 et exemple 2, les figures 1 et 2 illustrant en outre le profil des contraintes d'épaisseur dans le cas des plaques vitrocéramiques nues (non revêtues) utilisées.

### Exemple de référence 1 :

Dans le premier exemple de référence, l'émail utilisé est un émail standard à base d'une poudre comprenant 70% en poids d'une fritte de verre de composition suivante : SiO₂ : 41.7 % ; Na₂O : 0.9 % ; K₂O : 3.5 % ; Li₂O : 2.1 % ; CaO : 2.8 % ; Al₂O₃ : 18.5 % ; ZrO₂ : 2.4 % ; B₂O₃ : 28 %, ladite poudre comprenant également 30% en poids de TiO₂ en tant que pigment. L'émail (plus spécifiquement la fritte de verre formant ledit émail) selon le présent exemple présente un coefficient de dilatation de l'ordre de 52.10⁻⁷ K⁻¹, et ledit émail (ou plutôt la fritte de verre formant ledit émail) présente également une température de ramollissement dilatométrique de l'ordre de 590°C. Dans cet exemple de référence, l'émail est déposé sur la plaque (de verre précuseur ou green glass ou verre-mère) avant céramisation et cuit lors de la céramisation, l'épaisseur de la couche d'émail après cuisson étant de l'ordre de 3 µm.

Le facteur d'échelle obtenu (selon le modèle de Weibull après test en flexion) est de l'ordre de 52 MPa, le module de Weibull étant égal à 13.

### Exemple de référence 2 :

Dans le second exemple de référence, l'émail utilisé est un émail standard à base d'une poudre comprenant 100% en poids de la fritte de verre décrite dans l'exemple de référence 1 (le coefficient de dilatation et la température de ramollissement dilatométrique de l'émail étant du même ordre que dans l'exemple de référence 1). Dans ce second exemple, l'émail est déposé sur la plaque déjà céramisée, l'ensemble étant (re)cuit à 800°C pendant 30 minutes, l'épaisseur de la couche d'émail après cuisson étant de l'ordre de 3 µm.

Le facteur d'échelle obtenu est de l'ordre de 80 MPa, le module de Weibull étant égal à 54 .

### Exemple de référence 3 :

Dans ce troisième exemple de référence, l'émail utilisé est un émail à base d'une poudre comprenant 100% en poids d' une fritte de verre de composition suivante : SiO₂ : 48.6 % ; MgO : 3.8 % ; Na₂O : 2.6 % ; K₂O : 3.3 % ; Li₂O : 1.3 % ; CaO : 0.6 % ; BaO : 17.8 % ; Al₂O₃ : 7.1 % ; ZrO₂ : 1.7 % ; ZnO : 8 % ; B₂O₃ : 5.4 %. L'émail selon le présent exemple présente un coefficient de dilatation de l'ordre de 75. 10⁻⁷ K⁻¹ et une température de ramollissement dilatométrique de l'ordre de 600°C. Dans ce troisième exemple, l'émail est déposé sur la plaque (green glass ou verre-mère) avant céramisation et cuit lors de la céramisation, l'épaisseur de la couche d'émail après cuisson étant de l'ordre de 3 µm.

Le facteur d'échelle obtenu est de l'ordre de 88 MPa, le module de Weibull étant égal à 27. Le profil des contraintes d'épaisseur dans la vitrocéramique est donné en figure 1 dans laquelle on ne note pas la présence d'un maximum de tension à proximité de la surface émaillée, la valeur maximale de contrainte étant de l'ordre de 0.9 MPa. En comparaison, le profil de contraintes d'une plaque non revêtue est représenté, ce profil ne présentant pas non plus de maximum de tension à proximité de la surface émaillée, une telle plaque présentant un facteur d'échelle de l'ordre de 170 MPa

### Exemple 1 :

Dans ce premier exemple selon l'invention, l'émail utilisé est un émail à base d'une poudre comprenant 100% en poids d' une fritte de verre de composition suivante : SiO₂ : 60.5 % ; MgO : 4 % ; Na₂O : 9.5 % ; Li₂O : 5 % ; BaO : 10 % ; ZrO₂ : 2 % ; ZnO : 4 % ; B₂O₃ : 5 %. L'émail selon le présent exemple présente un coefficient de dilatation de l'ordre de 100.10⁻⁷ K⁻¹ et une température de ramollissement dilatométrique de l'ordre de 523°C. Dans ce premier exemple, l'émail est déposé sur la plaque (green glass ou verre-mère) avant céramisation et cuit lors de la céramisation, l'épaisseur de la couche d'émail après cuisson étant de l'ordre de 3 µm.

Le facteur d'échelle obtenu est de l'ordre de 180 MPa, le module de Weibull étant égal à 27. Le profil des contraintes d'épaisseur dans la vitrocéramique est donné en figure 2 dans laquelle on observe la présence d'un pic avec une contrainte de tension maximale de 3.0 MPa à une profondeur (mesurée perpendiculairement à la surface) de 0.45 mm sous la surface (à partir du côté émaillé/renforcé par l'émail). En comparaison, le profil de contraintes d'une plaque non revêtue est représenté, ce profil ne présentant pas de maximum de tension à proximité de la surface émaillée, comme déjà indiqué dans l'exemple de référence 3.

### Exemple 2 :

Dans ce second exemple selon l'invention, l'émail utilisé est le même émail que dans l'exemple 1 précédent selon l'invention, l'émail étant cette fois déposé sur la plaque déjà céramisée, l'ensemble étant (re)cuit à 770°C pendant 30 minutes, l'épaisseur de la couche d'émail après cuisson étant de l'ordre de 3 µm.

Le facteur d'échelle obtenu est de l'ordre de 207 MPa, le module de Weibull étant égal à 19.

Le profil des contraintes d'épaisseur dans la vitrocéramique est donné en figure 3 dans laquelle on observe la présence d'un maximum de tension et d'une flexion, avec une contrainte de tension maximale de 3.1 à une profondeur de 0.7 mm sous la surface (à partir du côté émaillé/renforcé par l'émail).

### Exemple 3 :

Dans ce troisième exemple selon l'invention, l'émail utilisé est à base d'une poudre comprenant 45% en poids de la fritte de verre décrite dans l'exemple 2 précédent selon l'invention, ladite poudre comprenant également 55% en poids de pigments noirs sous forme d'un mélange d'oxydes de fer, chrome, cobalt et nickel (le coefficient de dilatation et la température de ramollissement dilatométrique de l'émail étant du même ordre que dans l'exemple 1 selon l'invention). L'émail est déposé sur la plaque déjà céramisée et cuit comme dans l'exemple 2 selon l'invention, l'épaisseur de la couche d'émail après cuisson étant de l'ordre de 6.75µm.

Le facteur d'échelle obtenu est de l'ordre de 238 MPa, le module de Weibull étant égal à 20, et la variation de couleur ΔE* de la plaque émaillée obtenue est de l'ordre de 0.04. On observe une contrainte de tension maximale de 2.0 MPa à une profondeur de 0.64 mm sous la surface (à partir du côté émaillé/renforcé par l'émail).

### Exemple 4 :

Dans ce quatrième exemple selon l'invention, l'émail utilisé est un émail à base d'une poudre comprenant 100% en poids d' une fritte de verre de composition suivante : SiO₂ : 63 % ; MgO : 4 % ; Na₂O : 9.5 % ; Li₂O : 2.5 % ; BaO : 10 % ; ZrO₂ : 2 % ; ZnO : 4 % ; B₂O₃ : 5 %. L'émail selon le présent exemple présente un coefficient de dilatation de l'ordre de 87.10⁻⁷ K⁻¹ et une température de ramollissement dilatométrique de l'ordre de 549°C. Dans ce quatrième exemple, l'émail est déposé sur la plaque déjà céramisée, l'ensemble étant (re)cuit à 800°C pendant 30 minutes, l'épaisseur de la couche d'émail après cuisson étant de l'ordre de 4 µm.

Le facteur d'échelle obtenu est de l'ordre de 262 MPa, le module de Weibull étant égal à 16 .

Les plaques selon l'invention peuvent notamment être utilisées avec avantages pour réaliser une nouvelle gamme de plaques de cuisson pour cuisinières ou tables de cuisson, ou pour réaliser des éléments de paroi ou des parois (par exemple des portes) de fours, ou pour réaliser des inserts de cheminée ou des pare-feu, etc

## Revendications

1. Article vitrocéramique, en particulier plaque vitrocéramique destinée par exemple à couvrir ou recevoir au moins un élément de chauffage, ledit article étant au moins en partie revêtu d'au moins une couche d'un émail formé, comme fritte de verre devant former la matrice vitreuse, d'une fritte de verre comprenant comme composants les composants suivants dans les proportions minimales et maximales suivantes exprimées en pourcentages pondéraux :
| | |
|---|---|
| SiO₂ | 50 - 66 % |
| MgO | 3 - 8 % |
| Na₂O | 7 - 15 % |
| K₂O | 0 - 3 % |
| Li₂O | 0 - 12 % |
| CaO | 0 - 10 % |
| BaO | 0 - 15% |
| Al₂O₃ | 0 - 3 % |
| ZrO₂ | 0 - 3 % |
| ZnO | 0 - 5 % |
| B₂O₃ | 0 - 8 % |
la somme des oxydes alcalinoterreux CaO + BaO étant en outre comprise entre 8 et 15 %, et la somme des oxydes alcalins Na₂O + K₂O + Li₂O étant en outre comprise entre 7 et 20 %.

2. Article vitrocéramique selon la revendication 1, caractérisé en ce la composition comprend moins de 2 % d'alumine Al₂O₃, et de façon avantageuse est dénuée d'alumine.

3. Article vitrocéramique selon l'une des revendications 1 ou 2, **caractérisé en ce que** l'émail est combiné à au moins une couche de peinture opacifiante et/ou au moins une couche d'émail.

4. Article vitrocéramique selon l'une des revendications 1 à 3, **caractérisé en ce que** ledit article présente un facteur d'échelle, obtenu selon le modèle de Weibull après test en flexion, d'au moins 130 MPa, et de préférence d'au moins 180 MPa.

5. Article vitrocéramique selon l'une des revendications 1 à 4, **caractérisé en ce que** ledit émail est cristallisé.

6. Article vitrocéramique selon l'une des revendications 1 à 5, **caractérisé en ce que** la fissure formée lors d'un choc s'oriente parallèlement à la surface.

7. Article vitrocéramique selon l'une des revendications 1 à 6, **caractérisé en ce qu'**il s'agit d'une plaque vitrocéramique de 3 mm d'épaisseur.

8. Article vitrocéramique selon l'une des revendications 1 à 7, renforcé en une face ou au moins une face ou au moins une zone d'au moins une face, en particulier plaque vitrocéramique renforcée destinée par exemple à couvrir ou recevoir au moins un élément de chauffage, **caractérisé en ce que** la vitrocéramique présente une contrainte de tension d'au moins 1.2 MPa à une profondeur d'au moins 50 µm, et de préférence d'au plus 25% de l'épaisseur de la vitrocéramique, sous sa surface, en au moins ladite zone ou face.

9. Composition d'émail pour article vitrocéramique, formée, comme fritte de verre devant former la matrice vitreuse, d'une fritte de verre comprenant comme composants les composants suivants dans les proportions minimales et maximales suivantes exprimées en pourcentages pondéraux :
| | |
|---|---|
| SiO₂ | 50 - 66 % |
| MgO | 3 - 8 % |
| Na₂O | 7 - 15% |
| K₂O | 0 - 3 % |
| Li₂O | 0 - 12% |
| CaO | 0 - 10 % |
| BaO | 0 - 15% |
| Al₂O₃ | 0 - 3 % |
| ZrO₂ | 0 - 3 % |
| ZnO | 0 - 5 % |
| B₂O₃ | 0 - 8 % |
la somme des oxydes alcalinoterreux CaO + BaO étant en outre comprise entre 8 et 15 %, et la somme des oxydes alcalins Na₂O + K₂O + Li₂O étant en outre comprise entre 7 et 20 %.

10. Composition d'émail selon la revendication 9, caractérisée l'émail présente un coefficient de dilatation d'au moins 60.10⁻⁷ K⁻¹.

11. Email pour article vitrocéramique, obtenu par cuisson de la composition selon l'une des revendications 9 ou 10.

12. Procédé de fabrication d'un article vitrocéramique renforcé selon l'une des revendications 1 à 8, **caractérisé en ce que** l'on introduit un maximum de tension sous la surface de la vitrocéramique, avantageusement à proximité de ladite surface, en particulier en utilisant une composition d'émail formée, comme fritte de verre devant former la matrice vitreuse, d'une fritte de verre comprenant comme composants les composants suivants dans les proportions minimales et maximales suivantes exprimées en pourcentages pondéraux :
| | |
|---|---|
| SiO₂ | 50 - 66 % |
| MgO | 3 - 8 % |
| Na₂O | 7 - 15 % |
| K₂O | 0 - 3 % |
| Li₂O | 0 - 12 % |
| CaO | 0 - 10% |
| BaO | 0 - 15% |
| Al₂O₃ | 0 - 3 % |
| ZrO₂ | 0 - 3 % |
| ZnO | 0 - 5 % |
| B₂O₃ | 0 - 8 % |
la somme des oxydes alcalinoterreux CaO + BaO étant en outre comprise entre 8 et 15 %, et la somme des oxydes alcalins Na₂O + K₂O + Li₂O étant en outre comprise entre 7 et 20 %.

13. Procédé selon la revendication 12, **caractérisé en ce que** la vitrocéramique est traitée de façon à présenter une contrainte de tension d'au moins 1.2 MPa à une profondeur d'au moins 50 µm, et de préférence d'au plus 25% de l'épaisseur de la vitrocéramique par rapport à la surface de la vitrocéramique, en au moins une zone de la vitrocéramique.

14. Procédé selon l'une des revendications 12 ou 13, **caractérisé en ce que** l'on applique ladite composition d'émail sur l'article de verre précurseur avant céramisation, ladite composition étant cuite pendant le cycle de céramisation et/ou **en ce que** l'on applique ladite composition sur l'article vitrocéramique après céramisation, puis on cuit ladite composition.

15. Procédé selon la revendication 14, **caractérisé en ce que** la cuisson de l'émail est effectuée après céramisation, de préférence à une température située dans la zone de cristallisation, de préférence proche du pic de cristallisation, et/ou à une température supérieure d'environ 250°C à 300°C par rapport à la température de ramollissement dilatométrique de l'émail.

16. Utilisation de la composition d'émail selon l'une des revendications 9 ou 10 pour le renforcement des vitrocéramiques en tout ou partie de leur surface.

17. Dispositif de cuisson et/ou de maintien à haute température comportant une plaque vitrocéramique selon l'une des revendications 1 à 8 et un ou plusieurs éléments de chauffage.

## Patentansprüche

1. Glaskeramikgegenstand, insbesondere Glaskeramikplatte, die zum Beispiel dazu bestimmt ist, mindestens ein Heizelement abzudecken oder aufzunehmen, wobei der Gegenstand mindestens teilweise mit mindestens einer Emailleschicht beschichtet ist, die als Glasfritte zum Bilden der Glasmatrix aus einer Glasfritte gebildet ist, umfassend als Bestandteile die folgenden Bestandteile in den folgenden minimalen und maximalen Anteilen, ausgedrückt in Gewichtsprozentsätzen:
| | |
|---|---|
| SiO₂ | 50 - 66 % |
| MgO | 3 - 8 % |
| Na₂O | 7 - 15% |
| K₂O | 0 - 3 % |
| Li₂O | 0 - 12 % |
| CaO | 0 - 10 % |
| BaO | 0 - 15 % |
| Al₂O₃ | 0 - 3 % |
| ZrO₂ | 0 - 3 % |
| ZnO | 0 - 5 % |
| B₂O₃ | 0 - 8 % |
wobei die Summe der Erdalkalioxide CaO + BaO ferner im Bereich zwischen 8 und 15 % liegt und die Summe der Alkalioxide Na₂O + K₂O + Li₂O ferner im Bereich zwischen 7 und 20 % liegt.

2. Glaskeramikgegenstand nach Anspruch 1, **dadurch gekennzeichnet, dass** die Zusammensetzung weniger als 2 % Aluminiumoxid Al₂O₃ umfasst und vorteilhafterweise frei von Aluminiumoxid ist.

3. Glaskeramikgegenstand nach einem der Ansprüche 1 oder 2, **dadurch gekennzeichnet, dass** die Emaille mit mindestens einer deckenden Farbschicht und/oder mindestens einer Emailleschicht kombiniert ist.

4. Glaskeramikgegenstand nach einem der Ansprüche 1 bis 3, **dadurch gekennzeichnet, dass** der Gegenstand einen Maßstabsfaktor, erhalten nach dem Weibull-Modell nach einer Biegeprüfung, von mindestens 130 MPa, vorzugsweise mindestens 180 MPa, aufweist.

5. Glaskeramikgegenstand nach einem der Ansprüche 1 bis 4, **dadurch gekennzeichnet, dass** die Emaille kristallisiert ist.

6. Glaskeramikgegenstand nach einem der Ansprüche 1 bis 5, **dadurch gekennzeichnet, dass** der bei einem Aufprall gebildete Riss parallel zur Oberfläche verläuft.

7. Glaskeramikgegenstand nach einem der Ansprüche 1 bis 6, **dadurch gekennzeichnet, dass** es sich um eine Glaskeramikplatte von 3 mm Dicke handelt.

8. Glaskeramikgegenstand nach einem der Ansprüche 1 bis 7, der auf einer Seite oder auf mindestens einer Seite oder in mindestens einem Bereich mindestens einer Seite verstärkt ist, insbesondere verstärkte Glaskeramikplatte, die zum Beispiel dazu bestimmt ist, mindestens ein Heizelement abzudecken oder aufzunehmen, **dadurch gekennzeichnet, dass** die Glaskeramik in mindestens dem Bereich oder mindestens auf der Seite in einer Tiefe von mindestens 50 µm und vorzugsweise von höchstens 25 % der Dicke der Glaskeramik unter ihrer Oberfläche eine Zugspannung von mindestens 1,2 MPa aufweist.

9. Emaillezusammensetzung für Glaskeramikgegenstand, die als Glasfritte zum Bilden der Glasmatrix aus einer Glasfritte gebildet ist, umfassend als Bestandteile die folgenden Bestandteile in den folgenden minimalen und maximalen Anteilen, ausgedrückt in Gewichtsprozentsätzen:
| | |
|---|---|
| SiO₂ | 50 - 66 % |
| MgO | 3 - 8 % |
| Na₂O | 7 - 15% |
| K₂O | 0 - 3 % |
| Li₂O | 0 - 12 % |
| CaO | 0 - 10 % |
| BaO | 0 - 15 % |
| Al₂O₃ | 0 - 3 % |
| ZrO₂ | 0 - 3 % |
| ZnO | 0 - 5 % |
| B₂O₃ | 0 - 8 % |
wobei die Summe der Erdalkalioxide CaO + BaO ferner im Bereich zwischen 8 und 15 % liegt und die Summe der Alkalioxide Na₂O + K₂O + Li₂O ferner im Bereich zwischen 7 und 20 % liegt.

10. Emaillezusammensetzung nach Anspruch 9, **gekennzeichnet,** die Emaille einen Ausdehnungskoeffizienten von mindestens 60.10⁻⁷ K⁻¹ aufweist.

11. Emaille für Glaskeramikgegenstand, erhalten durch Brennen der Zusammensetzung nach einem der Ansprüche 9 oder 10.

12. Verfahren zum Herstellen eines verstärkten Glaskeramikgegenstands nach einem der Ansprüche 1 bis 8, **dadurch gekennzeichnet, dass** eine maximale Spannung unter der Oberfläche der Glaskeramik, vorteilhafterweise nahe der Oberfläche, eingeführt wird, insbesondere unter Verwendung einer Emaillezusammensetzung, die als Glasfritte zum Bilden der Glasmatrix aus einer Glasfritte gebildet wird, umfassend als Bestandteile die folgenden Bestandteile in den folgenden minimalen und maximalen Anteilen, ausgedrückt in Gewichtsprozentsätzen:
| | |
|---|---|
| SiO₂ | 50 - 66 % |
| MgO | 3 - 8 % |
| Na₂O | 7 - 15% |
| K₂O | 0 - 3 % |
| Li₂O | 0 - 12 % |
| CaO | 0 - 10 % |
| BaO | 0 - 15 % |
| Al₂O₃ | 0 - 3 % |
| ZrO₂ | 0 - 3 % |
| ZnO | 0 - 5 % |
| B₂O₃ | 0 - 8 % |
wobei die Summe der Erdalkalioxide CaO + BaO ferner im Bereich zwischen 8 und 15 % liegt und die Summe der Alkalioxide Na₂O + K₂O + Li₂O ferner im Bereich zwischen 7 und 20 % liegt.

13. Verfahren nach Anspruch 12, **dadurch gekennzeichnet, dass** die Glaskeramik so behandelt wird, dass sie in mindestens einem Bereich der Glaskeramik in einer Tiefe von mindestens 50 µm und vorzugsweise von höchstens 25 % der Dicke der Glaskeramik bezogen auf die Oberfläche der Glaskeramik eine Zugspannung von mindestens 1,2 MPa aufweist.

14. Verfahren nach einem der Ansprüche 12 oder 13, **dadurch gekennzeichnet, dass** die Emaillezusammensetzung vor der Keramikbildung auf den Glasausgangsartikel aufgetragen wird, wobei die Zusammensetzung während des Keramikbildungszyklus gebrannt wird, und/oder **dadurch, dass** die Zusammensetzung nach der Keramikbildung auf den Glaskeramikartikel aufgetragen wird und die Zusammensetzung anschließend gebrannt wird.

15. Verfahren nach Anspruch 14, **dadurch gekennzeichnet, dass** das Brennen der Emaille nach der Keramikbildung erfolgt, vorzugsweise bei einer Temperatur innerhalb des Kristallisationsbereichs, vorzugsweise in der Nähe des Kristallisationspeaks, und/oder bei einer Temperatur, die bezogen auf die dilatometrische Erweichungstemperatur der Emaille um etwa 250 °C bis 300 °C höher liegt.

16. Verwendung der Emaillezusammensetzung nach einem der Ansprüche 9 oder 10 zur Verstärkung der Glaskeramiken auf ihrer gesamten oder einem Teil ihrer Oberfläche.

17. Vorrichtung zum Kochen und/oder Halten auf hoher Temperatur, umfassend eine Glaskeramikplatte nach einem der Ansprüche 1 bis 8 und ein oder mehrere Heizelemente.

## Claims

1. A glass-ceramic article, in particular a glass-ceramic plate intended, for example, for covering or accommodating at least one heating element, said article being at least partly coated with at least one layer of an enamel formed, as glass frit that has to form the glassy matrix, from a glass frit comprising as components the following components in the following minimum and maximum proportions expressed as weight percentages:
| | |
|---|---|
| SiO₂ | 50 - 66% |
| MgO | 3 - 8% |
| Na₂O | 7 - 15% |
| K₂O | 0 - 3% |
| Li₂O | 0 - 12 % |
| CaO | 0 - 10 % |
| BaO | 0 - 15% |
| Al₂O₃ | 0 - 3% |
| ZrO₂ | 0 - 3% |
| ZnO | 0 - 5% |
| B₂O₃ | 0 - 8% |
the sum of the alkaline-earth metal oxides CaO + BaO moreover being between 8 and 15%, and the sum of the alkali metal oxides Na₂O + K₂O + Li₂O moreover being between 7 and 20%.

2. The glass-ceramic article as claimed in claim 1, **characterized in that** the composition comprises less than 2% of alumina Al₂O₃, and advantageously is alumina-free.

3. The glass-ceramic article as claimed in either of claims 1 and 2, **characterized in that** the enamel is combined with at least one layer of opacifying paint and/or with at least one layer of enamel.

4. The glass-ceramic article as claimed in one of claims 1 to 3, **characterized in that** said article has a scale factor, obtained according to the Weibull model, after a bending test, of at least 130 MPa, and preferably of at least 180 MPa.

5. The glass-ceramic article as claimed in one of claims 1 to 4, **characterized in that** said enamel is crystallized.

6. The glass-ceramic article as claimed in one of claims 1 to 5, **characterized in that** the crack formed during a shock is oriented parallel to the surface.

7. The glass-ceramic article as claimed in one of claims 1 to 6, **characterized in that** it is a 3-mm thick glass-ceramic plate.

8. A reinforced glass-ceramic article as claimed in one of claims 1 to 7, which is reinforced over one face or at least one face or at least one region of at least one face, in particular a reinforced glass-ceramic plate intended, for example, for covering or accommodating at least one heating element, **characterized in that** the glass-ceramic has a tensile stress of at least 1.2 MPa at a depth of at least 50 µm, and preferably of at most 25% of the thickness of the glass-ceramic, beneath its surface, in at least said region or face.

9. An enamel composition for a glass-ceramic article, formed, as glass frit that has to form the glassy matrix, from a glass frit comprising as components the following components in the following minimum and maximum proportions expressed as weight percentages:
| | |
|---|---|
| SiO₂ | 50 - 66% |
| MgO | 3 - 8% |
| Na₂O | 7 - 15% |
| K₂O | 0 - 3% |
| Li₂O | 0 - 12% |
| CaO | 0 - 10% |
| BaO | 0 - 15% |
| Al₂O₃ | 0 - 3% |
| ZrO₂ | 0 - 3% |
| ZnO | 0 - 5% |
| B₂O₃ | 0 - 8% |
the sum of the alkaline-earth metal oxides CaO + BaO moreover being between 8 and 15%, and the sum of the alkali metal oxides Na₂O + K₂O + Li₂O moreover being between 7 and 20%.

10. The enamel composition as claimed in claim 9, **characterized in that** the enamel has an expansion coefficient of at least 60×10⁻⁷ K⁻¹.

11. An enamel for a glass-ceramic article, obtained by baking the composition as claimed in either of claims 9 and 10.

12. A process for manufacturing a reinforced glass-ceramic article as claimed in one of claims 1 to 8, **characterized in that** a maximum tension is introduced beneath the surface of the glass-ceramic, advantageously in proximity to said surface, in particular by using an enamel composition formed, as glass frit that has to form the glassy matrix, from a glass frit comprising as components the following components in the following minimum and maximum proportions expressed as weight percentages:
| | |
|---|---|
| SiO₂ | 50 - 66% |
| MgO | 3 - 8% |
| Na₂O | 7 - 15% |
| K₂O | 0 - 3% |
| Li₂O | 0 - 12% |
| CaO | 0 - 10% |
| BaO | 0 - 15% |
| Al₂O₃ | 0 - 3% |
| ZrO₂ | 0 - 3% |
| ZnO | 0 - 5% |
| B₂O₃ | 0 - 8% |
the sum of the alkaline-earth metal oxides CaO + BaO moreover being between 8 and 15%, and the sum of the alkali metal oxides Na₂O + K₂O + Li₂O moreover being between 7 and 20%.

13. The process as claimed in claim 12, **characterized in that** the glass-ceramic is treated so as to have a tensile stress of at least 1.2 MPa at a depth of at least 50 µm, and preferably of at most 25% of the thickness of the glass-ceramic relative to the surface of the glass-ceramic, in at least one region of the glass-ceramic.

14. The process as claimed in one of claims 12 or 13, **characterized in that** said enamel composition is applied to the precursor glass article before ceramization, said composition being baked during the ceramization cycle and/or in that said composition is applied to the glass-ceramic article after ceramization, then said composition is baked.

15. The process as claimed in claim 14, **characterized in that** the enamel is baked after ceramization, preferably at a temperature located in the crystallization zone, preferably close to the crystallization peak, and/or at a temperature of the order of 250°C to 300°C higher with respect to the dilatometric softening temperature of the enamel.

16. The use of the enamel composition as claimed in either of claims 9 or 10 for reinforcing the glass-ceramics over all or part of their surface.

17. A device for baking or for maintaining at high temperature, comprising a glass-ceramic plate as claimed in one of claims 1 to 8 and one or more heating elements.
